# EUROPEAN PATENT APPLICATION

(11) **EP 4 671 387 A1**
(43) Date of publication of application: **31.12.2025**
(21) Application number: 25185419.6
(22) Date of filing: 26.06.2025
(51) Int. Cl.: C14B 17/00, C14B 17/06, B65G 15/58, B65G 47/52

(54) **MOVEMENT DEVICE FOR LIFTING A SKIN EQUIPPED WITH A SYSTEM FOR CONTROLLING THE SURFACE CHARACTERISTICS OF THE SKIN**

(30) Priority: 26.06.2024 IT 202400014773
(71) Applicant: WEGA S.R.L., 36071 Arzignano (VI) (IT)
(72) Inventor: POVOLERI, Giangiorgio, 36071 Arzignano (VI) (IT); TREVISAN, Andrea, 36070 Trissino (VI) (IT)
(74) Representative: Caldon, Giuliano

(57) **Abstract**

The present invention relates to a Movement device (10; 110; 210; 310; 410; 710; 810) for lifting a skin (P) comprising means for gripping and displacing (20; 120; 220; 720) of the skin (P) and first means for detecting (60) of the surface characteristics of the skin (P) configured to inspect an area on a first side (P1) of the skin (P). The means for gripping and displacing (20; 120; 220; 720) comprise a movable belt (22; 722) which identifies an inner side (24) and an outer side (26) in which said outer side (26) defines a gripping surface (28; 728) on which the skin (P) is made to adhere and kept in suspension by the effect of air suction means (30; 130; 230). The gripping surface (28; 728) comprises a flat portion (32; 732) and the first means for detecting (60) are positioned in such a way that the inspection area involves the first side (P1) of the skin (P) when the skin (P) is located in the flat portion (32; 732).

## Description

### FIELD OF PROTECTION OF THE INVENTION

The present invention relates to a movement device for lifting hides, particularly for handling skins in hide processing and/or treatment and/or inspection systems.

More specifically, the present invention relates to a movement device for lifting skins equipped with a system for monitoring the skin's surface characteristics.

### DESCRIPTION OF THE STATE OF THE ART

The leather production industry is well known for the need to move leather through different workstations that perform different types of processing and/or treatments and/or quality controls on the skins themselves.

It should be noted that for the purposes of this description, "skins" refers to any type of laminar product commonly referred to as a skin, which may include, for example, natural leather (hide) or so-called faux leather or synthetically finished leather, used in a wide variety of sectors, such as clothing and footwear, the automotive industry, furniture, etc.

The production of leather, whether natural or synthetic, requires various phases that necessarily involve moving the leather through different workstations dedicated to specific mechanical or chemical processing or treatments within a dedicated plant.

Mentioned here, by way of example but not limited to, are splitting machines used in the tanning industry to separate the premium outer portion (grain) of an animal skin from the less premium portion (split), or finishing systems that, starting from lower-quality skins, apply one or more finishing layers of synthetic material, possibly colored.

In addition to mechanical and/or chemical treatments on the skin, within the plants are also included dedicated stations to monitor the correct functioning of the process, for example by detecting appropriate parameters within the skin. For example, units for assessing the surface quality of the skin may be installed, typically using cameras that focus on the skin's surface and/or detect any irregularities/defects.

According to the prior art, suction rollers are typically used to move skins between stations or within a station. The skin is held in place by the suction effect of air drawn into through openings in the outer portion of the roller.

WO2022053906A1 describes the use of suction rollers for moving skins and discloses the use of means for detecting consisting of contact image sensors (CIS) that acquire images of the skin when it rests on the outer surface of the roller.

The primary purpose of this invention is to propose an alternative solution to prior art systems for moving skins and detecting their surface characteristics.

### DESCRIPTION OF THE PRESENT INVENTION

In a first aspect, the present invention relates to a movement device for lifting a skin, comprising means for gripping and displacing said skin and first means for detecting the surface characteristics of said skin, configured to inspect an area on a first side of said skin. The means for gripping and displacing comprise a movable belt that identifies (i.e., has) an inner side and an outer side, said outer side being capable of defining a gripping surface on which said skin is made to adhere and kept in suspension by air suction means acting on said outer side. The gripping surface comprises a flat portion, and the first means for detecting are positioned such that said inspection area affects said first side of said skin when said skin is located in said flat portion.

Preferably, the movable belt comprises a conveyor belt that winds around at least two rotation rollers.

In a preferred embodiment, said flat portion is defined on said outer side of said conveyor belt that extends between said two rotation rollers.

According to a preferred embodiment, the movable belt comprises a plurality of through openings, and the air suction means act from the inner side of the movable belt and, through said plurality of openings, define the gripping surface on the outer side of the movable belt. Preferably, the air suction means comprise a suction cavity that identifies (i.e., has) a suction side facing the inner side of the movable belt.

In a preferred embodiment, the air suction means are configured to modify the suction area and the corresponding area of the gripping surface to which the skin adheres.

According to a preferred embodiment, the air suction means comprise a plurality of side-by-side suction cavities, each cavity of said plurality of cavities identifying (i.e., having) a suction side facing the inner side of the movable belt.

Preferably, the suction cavities can be activated independently of one another.

In another preferred embodiment, the air suction means comprise a suction cavity that identifies (i.e., has) a suction side facing the inner side of the movable belt and comprises a movable bulkhead capable of modifying the extent of the suction area of the suction side.

According to a preferred embodiment, the air suction means comprise a suction unit, preferably a suction pump.

Preferably, the movement device further comprises means for feeding the skin to the movable belt and/or means for collecting the skin from the moving belt.

In a preferred embodiment, the means for feeding and/or means for collecting comprise a conveyor belt for the skin or a rest plane for the skin.

According to a preferred embodiment, the movement device comprises second means for detecting for detecting the surface characteristics of the skin and configured to inspect an area on a second side of the skin opposite the first side.

Preferably, the first means for detecting and/or the second means for detecting comprise a linear scan camera.

In another aspect, the present invention relates to a system for the treatment of a skin comprising a movement device made as described above.

### SHORT DESCRIPTION OF THE FIGURES

Further advantages, objectives, and features, as well as embodiments of the present invention, are defined in the claims and will be clarified below by means of the following description, in which reference is made to the accompanying drawings; in the drawings, corresponding or equivalent features and/or component parts of the present invention are identified by the same reference numbers. In particular:
- Figure 1 represents a schematic view of a skin movement device according to a preferred embodiment of the invention;
- Figure 2 shows the movement device of Figure 1 in operation;
- Figure 2A shows an enlarged detail of Figure 2;
- Figure 3 shows a schematic view of a skin movement device according to a variant embodiment of the invention;
- Figures 3.1 to 3.17 show various phases of operation of the movement device of Figure 3;
- Figure 4 shows a schematic view of a skin movement device according to another variant embodiment of the invention;
- Figures 4.1 to 4.6 show various phases of operation of the movement device of Figure 4;
- Figure 5 shows a schematic view of a skin movement device according to another embodiment of the invention;
- Figure 6 shows an axonometric view of a skin movement device according to a preferred embodiment of the invention;
- Figure 6A shows an axonometric view of an enlarged detail of the movement device of Figure 6 isolated from the rest;
- Figure 7 shows a sectional view along the VII-VII section line of Figure 6;
- Figure 8 shows an enlarged detail of Figure 7;
- Figure 9 shows an axonometric view of some elements of the skin movement device of Figure 6 isolated from the rest;
- Figure 10 shows the sectional view of Figure 7 with the skin movement device in a particular operating condition;
- Figure 11 shows the sectional view of Figure 7 with the suction cavities highlighted;
- Figure 12 shows a schematic view of a skin movement device according to another embodiment of the invention;
- Figure 13 shows a schematic view of a skin movement device according to another embodiment of the invention.

### DETAILED DESCRIPTION OF PREFEREED EMBODIMENTS OF THE PRESENTE INVENTION

Although the present invention is described below with reference to the embodiments shown in the drawings, the present invention is not limited to the embodiments described below and shown in the drawings.

On the contrary, the embodiments described and shown in the drawings clarify certain aspects of the present invention, the scope of which is defined in the claims.

The present invention finds particular but not exclusive application in the tanning sector for the treatment of natural leather, or hides.

In particular, the skin movement device can be advantageously used within a plant, for example, at the beginning, at the end, or as an intermediate unit between subsequent stations dedicated to skin processing, such as mechanical or chemical treatment stations within the plant.

It should be noted, however, that the use of the movement device is not limited to such applications. On the contrary, the present invention finds convenient application in any type of situation where surface control of the skin is required.

Preferred embodiments of the skin movement device according to the present invention will be described below, with reference to the figures.

For simplicity of explanation, the skin movement device may also be referred to simply as the "device" in the remainder of this description.

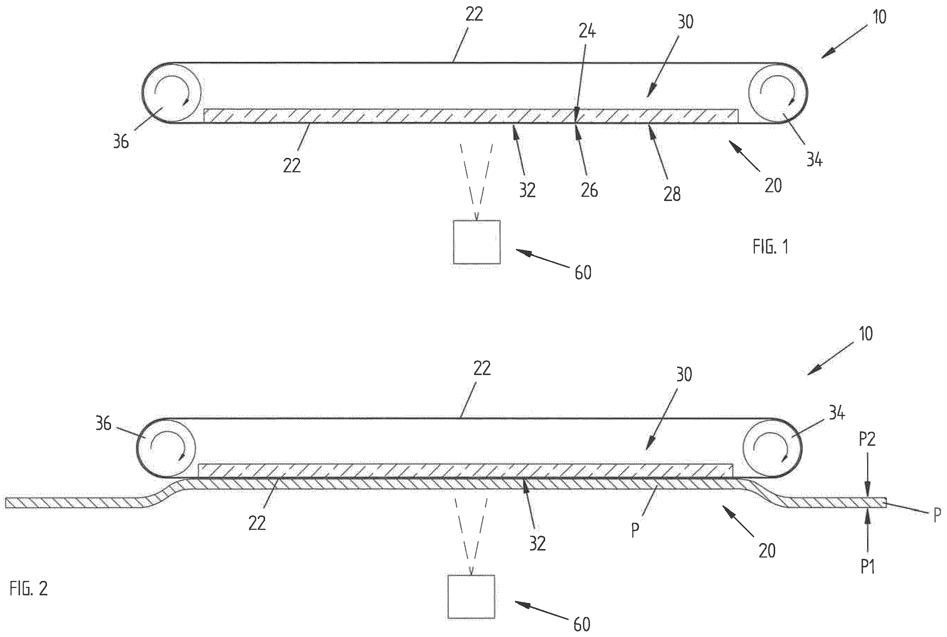

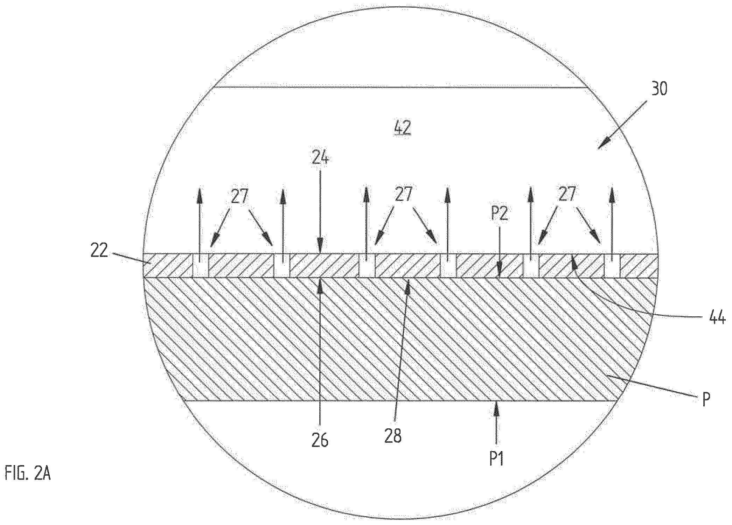

In these figures, the device is illustrated as a stand-alone unit that can be used, preferably, within a plant for the treatment of a skin. Figures 1 and 2 show a schematic illustration of a skin P movement device 10 according to a preferred embodiment of the invention.

The skin P movement device 10 according to the invention is identified by means for gripping and displacing 20 the skin P and by first means for detecting 60 the surface characteristics of the skin P.

The gripping and displacing means 20, as described in detail below, are configured to grip and displace the skin P between two positions in which the movement of the skin P requires gripping it from above, i.e., lifting it. The first means for detecting 60 are configured to inspect an area on a first side P1 of the skin P.

In the tanning industry, for example, the first side P1 of the skin P could coincide with the premium outer portion (grain) of an animal skin. The second side P2 of the skin P, opposite the first side P1, in this case consists of the less premium portion (split) of the skin P. It is clear that the first side P1 of the skin P could coincide with the less premium portion (split) of the skin P and the second side P2 coincide with the premium outer portion (grain) of the skin P.

The first means for detecting 60 are preferably configured to inspect an area on the first side P1 of the skin P.

The first means for detecting 60 therefore identify an area on the first side P1 of the skin P. The shape and extent of the inspection area A of the skin P depends on the type and/or number of means for detecting 60 used.

For example, in a preferred embodiment, the first means for detecting 60 comprise a video or photo camera positioned at an appropriate distance from the skin P capable of identifying an inspection area A that encompasses the entire width of the skin P.

In another preferred embodiment, the first means for detecting 60 may instead identify an inspection area A restricted to the width of the skin P.

In a further embodiment, the first means for detecting 60 comprise a plurality of devices, each capable of identifying an inspection area A restricted to the width of the skin P and preferably appropriately positioned to inspect the skin P across its entire width. For example, the first means for detecting 60 comprise a linear scan camera or, more preferably, a plurality of cameras aligned to cover the scan of the skin along its entire length.

In a further embodiment, the first means for detecting may comprise a device capable of identifying an inspection area A narrow with respect to the width of the skin P and then comprise means for moving the device itself to allow positioning of the means for detecting along the width of the skin P.

The means for gripping and displacing 20 comprise a movable belt 22 that identifies (i.e., has) an inner side 24 and an outer side 26, in which the outer side 26 defines a gripping surface 28 to which the skin P is made to adhere, in particular the second side P2 of the skin P, as shown in detail in Figure 2A.

The adhesion of the skin P to the gripping surface 28 of the belt 22 is preferably achieved by air suction means 30 that act on the outer side 26 of the belt 22 itself, and keep the skin P itself suspended.

According to one aspect of the present invention, the gripping surface 28 comprises at least one flat portion 32, and the means for detecting 60 are positioned such that the inspection area A, identified by said means for detecting 60, affects the first side P1 of the skin P when said skin is located in the flat portion 32 of the gripping surface 28.

Advantageously, the skin P is evenly spread over the flat portion 32 of the gripping surface 28, and the means for detecting 60 can optimally detect/acquire images within the inspection area A. In particular, the means for detecting 60 can be of the type indicated above. This avoids the use of contact image sensors (CIS) used in the prior art where the skin to be inspected rests on the curved outer surface of the roller and not on a flat surface as in the case of the present invention.

Advantageously, the costs incurred for the means for detecting are reduced compared to the prior art.

Moreover, advantageously, the proposed solution allows for greater flexibility in positioning the means for detecting 60 within the movement device 10.

Specifically, the means for detecting 60 can be positioned below the conveyor belt 22 and can optimally detect/acquire images within the inspection area A while the skin P is kept suspended and homogeneously stretched on the flat portion 32 of the gripping surface 28.

The data acquired by the means for detecting 60 can be used and/or made available for the intended purposes, such as the detection of any deformities/defects in the skin P, the size of the defect, or other surface characteristics, such as color, shape of the skin, area of the skin, etc. The gripping and displacing means 20, as mentioned, move the skin P between two positions using the movable belt 22. In the preferred embodiment illustrated in Figures 1 and 2, the movable belt 22 comprises a conveyor belt that winds around two rotation rollers 34, 36, where at least one of the two rollers 34, 36 is preferably motorized.

The flat portion 32 is therefore preferably defined on the outer side 26 of the conveyor belt 22, which extends between the two rotation rollers 34, 36.

The conveyor belt 22 comprises a plurality of through openings 27, and the air suction means 30 act from the inner side 24 of the conveyor belt 22 and, through the plurality of openings 27, define the gripping surface 28 for the skin P, as shown in Figure 2A. Activation of the air suction means 30 creates a suction force on the gripping surface 28 at the openings 27, which keeps the skin P suspended and adherent to the gripping surface 28 and allows it to be dragged while the conveyor belt 22 moves.

Preferably, the means for detecting 60 simultaneously acquire images within the inspection area A of the first side P1 of the skin P as the skin is advanced. In a variant embodiment, image acquisition through the means for detecting 60 occurs by temporarily stopping the rotation of the conveyor belt 22 and thus keeping the skin P temporarily still.

According to the preferred embodiment illustrated in Figures 1 and 2, the air suction means 30 preferably comprise a suction cavity 42 that identifies a suction side 44 facing the inner side 24 of the conveyor belt 22.

In a preferred embodiment, the suction side 44 facing the inner side 24 of the conveyor belt 22 is open.

In another embodiment, the suction cavity identifies a closed suction side, equipped with suction holes, on which the conveyor belt rests and slides.

In another embodiment, the conveyor belt rests and slides on special rails that extend between the two rotation rollers.

More preferably, the suction cavity 42 has a box-like/parallelepiped shape with the suction side 44 facing the conveyor belt 22.

Preferably, the suction side 44 extends along the conveyor belt 22 for a length sufficient to allow the desired amount of movement of the skin P.

In the illustrated embodiment, the suction side 44 extends along the conveyor belt 22 substantially along the entire distance between the two rollers 34, 36.

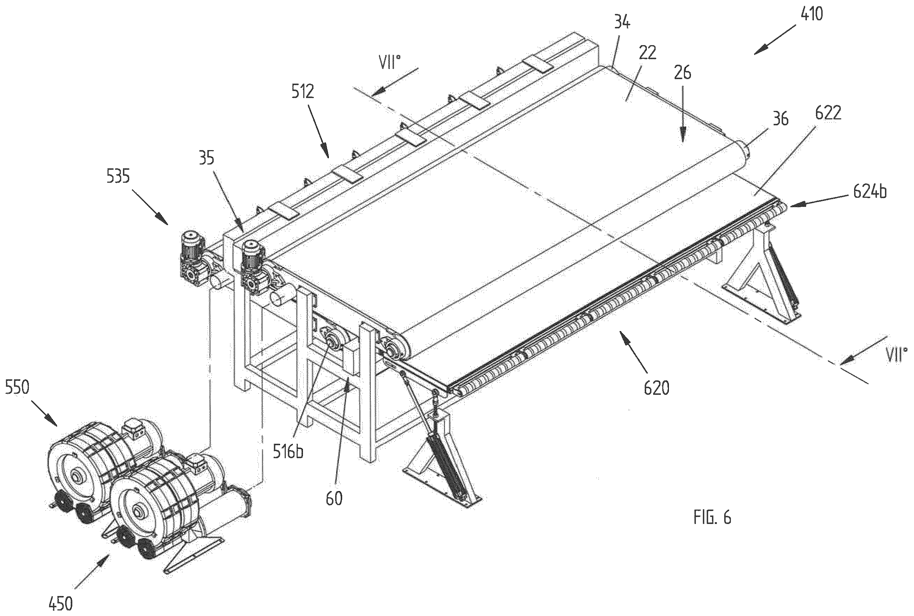

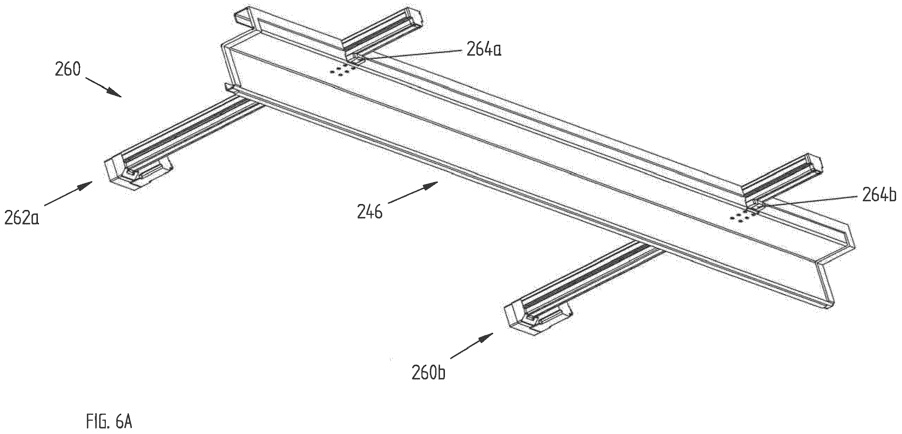

The suction cavity 42 is preferably connected to a suction unit, such as a suction pump, not shown in schematic figures 1 and 2 and described, for example, in the embodiment of the device described below with reference to figures 6 to 11.

Operationally, the suction cavity is activated for the entire time necessary to move the skin P from the beginning to the end of the conveyor belt 22 as it advances.

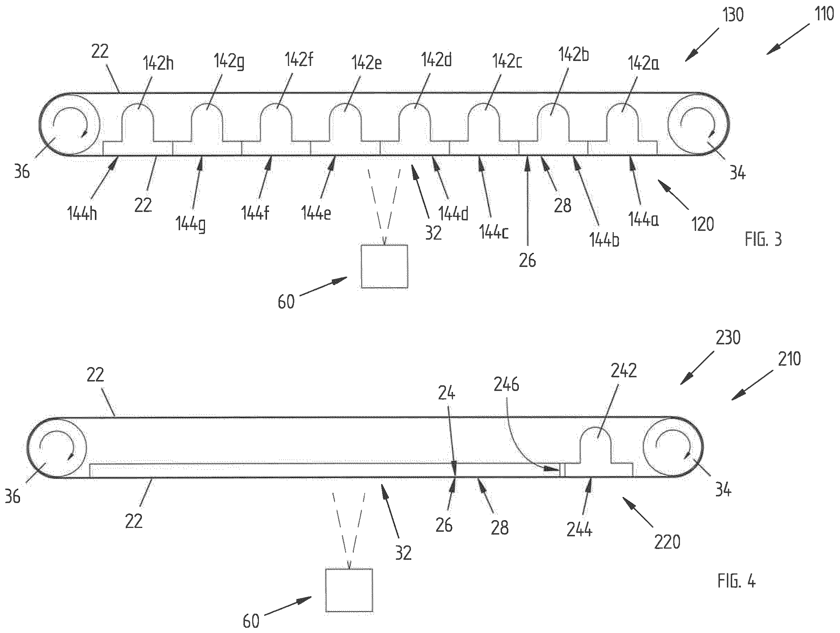

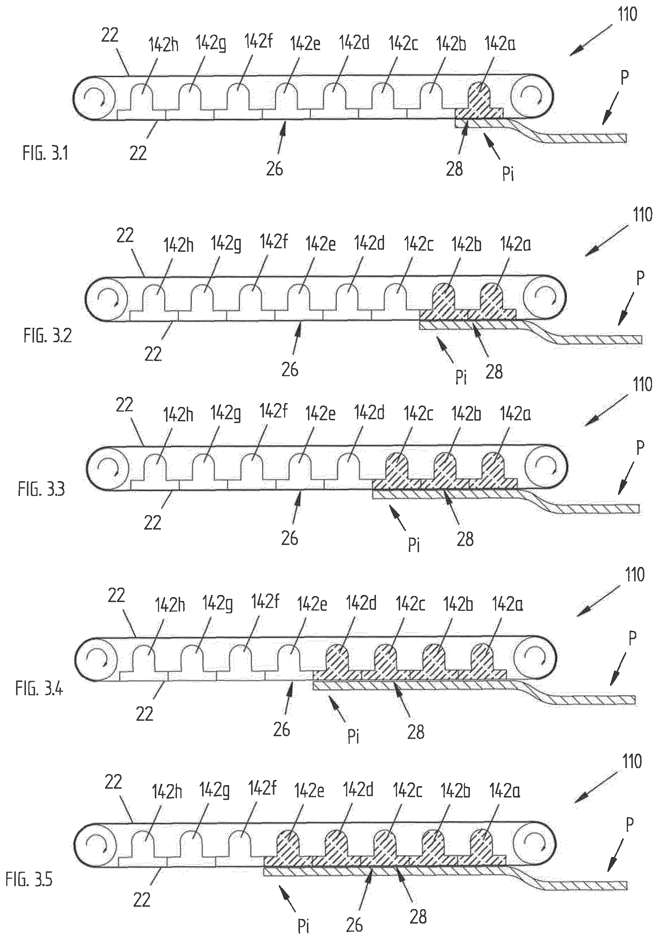

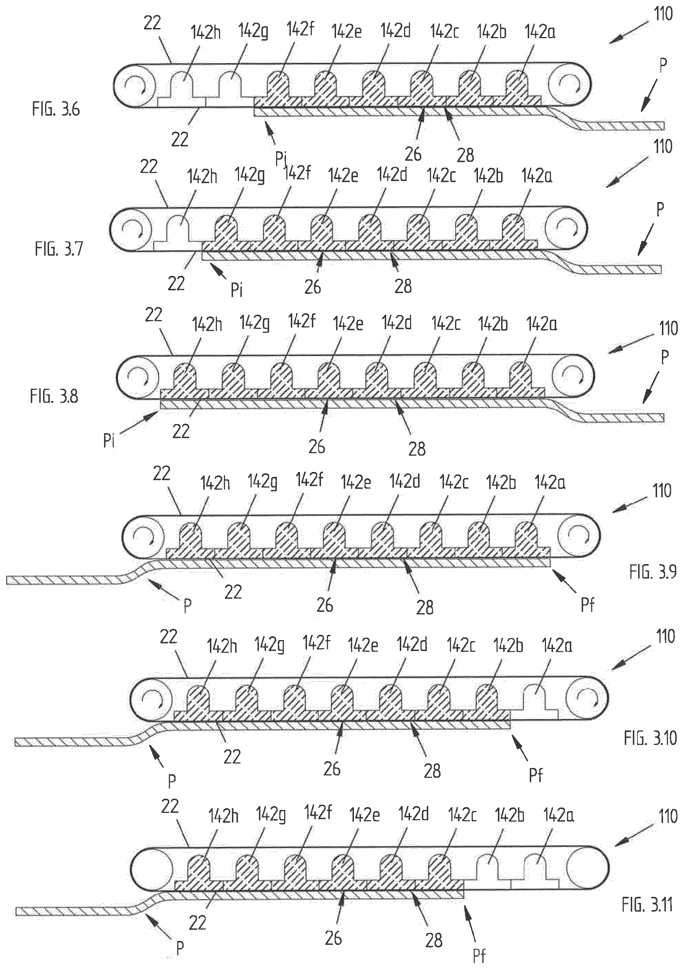

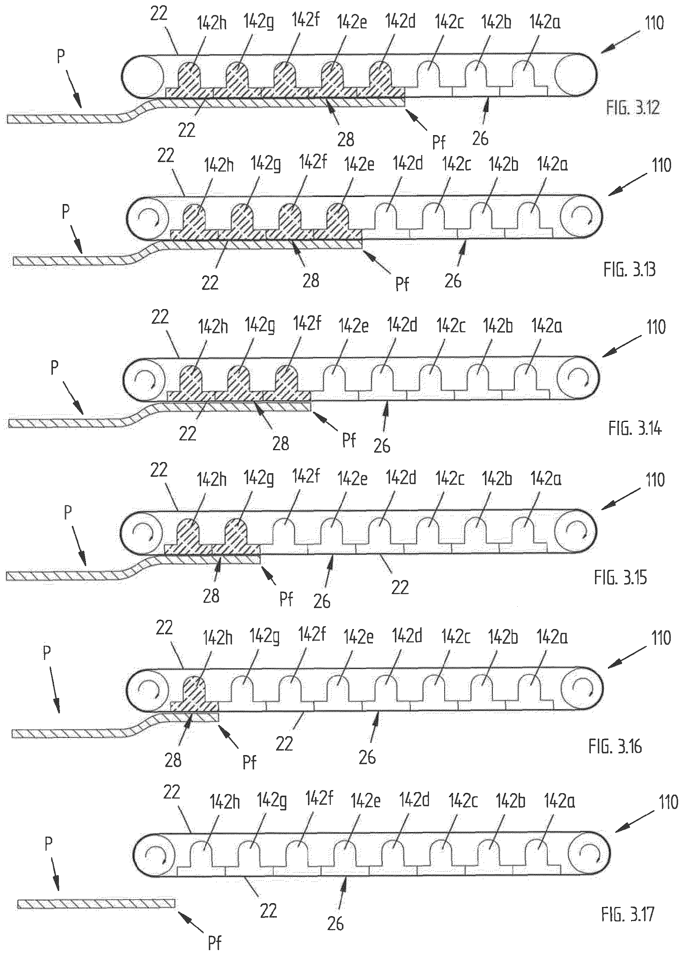

With reference to Figure 3, a variant embodiment of the device 110 of the invention is shown, which differs from the previously described embodiment due to the different configuration of the air suction means 130 and the means for gripping and displacing 120: elements corresponding or equivalent to the previously described embodiment are identified by the same reference numbers.

The suction means 130 are preferably configured to modify the suction area and therefore the corresponding area of the gripping surface 28 of the conveyor belt to which the skin P is made to adhere.

The suction means 130 according to this embodiment preferably comprise a plurality of adjacent suction cavities 142a-142h.

In the illustrated embodiment, 8 adjacent suction cavities 142a-142h are shown by way of example. In alternative embodiments, however, the number of suction cavities may be different.

The number of cavities can be chosen appropriately based on the specific application, for example, based on the expected travel distance, the required distance between rotation rollers, the weight of the skin to be moved, etc.

Each suction cavity 142a-142h identifies a corresponding suction side 144a-144h facing the inner side 24 of the conveyor belt 22.

Each suction cavity 142a-142h is preferably connected to a respective individually activated suction line. In a preferred embodiment, each suction line includes a suction pump that can be activated when necessary. In a variant embodiment, the suction lines feed a common suction pump, and suitable controllable opening/closing means, such as a valve, are positioned along the suction lines to independently control the air flow in each suction line.

Advantageously, each suction cavity 142a-142h can be individually activated to move the skin P while the conveyor belt 22 is rotated.

Referring to Figures 3.1 to 3.17, a preferred control mode for the device 110 is shown with reference to the aforementioned air suction means 130.

These figures show how the suction cavities 142a-142h are sequentially activated to move the skin P while the conveyor belt 22 is rotated.

The first phase (Fig. 3.1) involves the activation of the first suction cavity 142a: the initial end Pi of the skin P is sucked and lifted against the outer side 26 of the conveyor belt 22. The conveyor belt 22 begins to rotate or, in a different operating mode, the conveyor belt 22 was already rotating previously.

When the initial end Pi of the skin P reaches the second suction cavity 142b, the second suction cavity 142b is activated (Fig. 3.2).

In a preferred embodiment, the moment at which the initial end Pi of the skin P reaches the second suction cavity 142b is determined by means of suitable photocells positioned to detect the presence or absence of the skin at the second suction cavity 142b.

In alternative embodiments, the moment at which the initial end Pi of the skin P reaches the second suction cavity 142b can be determined by considering the advancement speed imparted to the skin P by the conveyor belt 22, from which the position of the skin P itself is derived. For example, the feed rate can be determined by means of an encoder associated with the electric motor 35 that drives the first roller 34.

Similarly, the subsequent suction cavities 142c-142h are gradually activated (Figures 3.3 to 3.8) as the conveyor belt 22 advances, and the skin P is therefore moved to the end of the conveyor belt 22, and the portion of skin P protruding from the conveyor belt 22 is released (Figure 3.9). When the final end Pf of the skin P no longer affects the first suction cavity 142a (Figure 3.10), the first suction cavity 142a itself is deactivated.

Similarly, the subsequent suction cavities 142b-142h are gradually deactivated (Figures 3.11 to 3.17) as the final end Pf of the skin P no longer affects them. When the final end Pf of the skin P leaves the last suction cavity 242h, the last suction cavity 142h is deactivated (Figure 3.17) and the movement of the skin P is concluded.

During this movement, the detection operations are obviously performed through the first means for detecting 60.

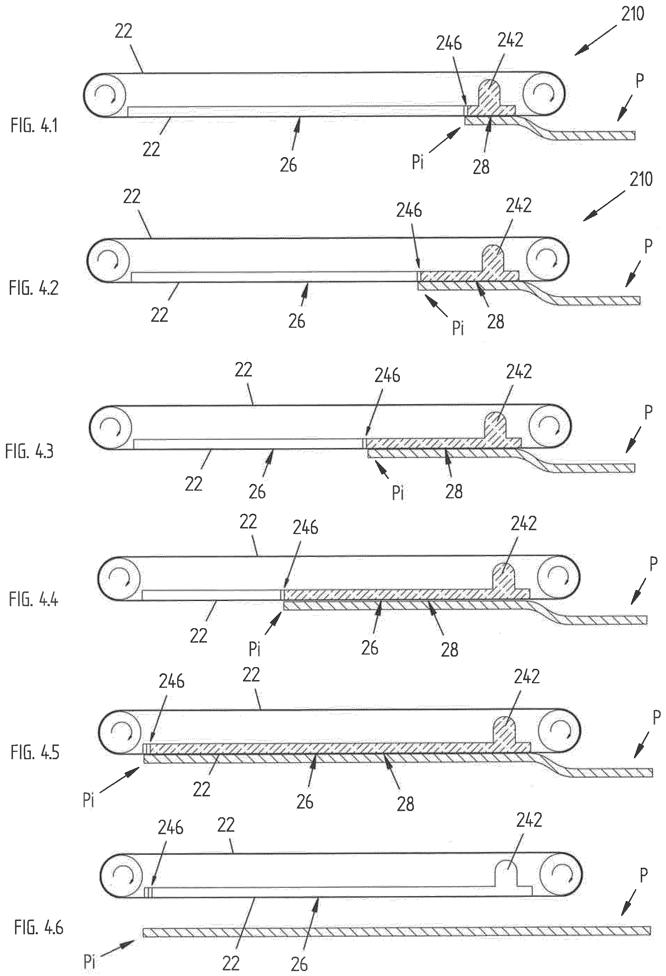

With reference to Figure 4, a variant embodiment of the device 210 of the invention is shown, which differs from the previously described embodiments due to the different configuration of the air suction means 230 and the means for gripping and displacing 220: elements corresponding or equivalent to the previously described embodiments are identified by the same reference numbers.

The suction means 230 are preferably configured to modify the suction area and therefore the corresponding area of the gripping surface 28 of the conveyor belt 22 on which the skin P is made to adhere and maintained in suspension.

The suction means 230 according to this embodiment preferably comprise a variable-width suction cavity 242.

The suction cavity 242 identifies a corresponding suction side 244 facing the inner side 24 of the conveyor belt 22.

The suction cavity 242 is preferably connected to a suction unit, such as a suction pump, not shown in Figure 4.

According to this embodiment, the suction means 230 preferably comprise a movable bulkhead 246 whose movement determines the variation of the gripping surface 28 of the conveyor belt 22 to which the skin P is made to adhere.

Preferably, the means for moving/rotating the conveyor belt 22 are the same as those of the movable bulkhead 246, such as an electric motor.

In a preferred embodiment, the movable bulkhead 246 is moved using displacement means 260 that are independent of the displacement/rotation means of the conveyor belt 22, as described below with reference to Figures 6 to 11.

Advantageously, the skin P is picked up and moved simultaneously with the rotation of the conveyor belt 22, as illustrated in Figures 4.1 to 4.6. These figures show a preferred control mode for device 210 with reference to the air suction means 230.

These figures show some positions assumed by device 210 while movable bulkhead 246 and conveyor belt 22 are moved to displace skin P.

The first phase (Fig. 4.1) involves the activation of suction cavity 242 with movable bulkhead 246 in a first position: the initial end Pi of skin P is sucked and lifted against the outer side 26 of conveyor belt 22.

Conveyor belt 22 begins to rotate, and simultaneously movable bulkhead 246 is moved, as shown in the subsequent figures 4.2 to 4.5.

When movable bulkhead 246 reaches its final position (Figure 4.5), skin P reaches its corresponding final position. The suction cavity 242 is then deactivated (Figure 4.6) and the skin P is released.

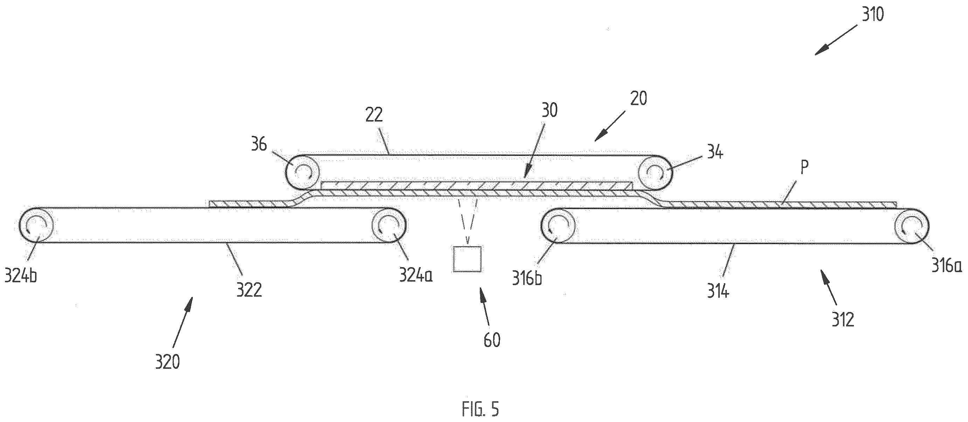

Figure 5 shows a variant embodiment of the device 310 of the invention that differs from the embodiment previously described with reference to Figures 1 and 2 in that it includes means 312 for feeding the skin P to the conveyor belt 22 and means for collecting 320 the skin P from the conveyor belt 22.

Elements corresponding or equivalent to the embodiment previously described with reference to Figures 1 and 2 are identified by the same reference numbers.

The means for feeding 312 and/or collecting 320 of the skin P facilitate the insertion of the device of the invention within a system, for example when the device of the invention is used as an intermediate detection unit between two stations of a skin P processing plant.

In a preferred embodiment, the device of the invention could be equipped with only means for feeding or only means for collecting.

According to the preferred embodiment illustrated in the figure, the means for feeding 312 preferably comprise a feeding conveyor belt 314 and the means for collecting means 320 preferably comprise a collecting conveyor belt 322. More preferably, the feeding conveyor belt 314 is rotated around two respective rotation rollers 316a, 316b, in which at least one of the two rollers 316a, 316b is preferably motorized, and the collecting conveyor belt 322 is rotated around two respective rotation rollers 324a, 324b, in which at least one of the two rollers 324a, 324b is preferably motorized.

In preferred embodiments, the means for feeding and/or the means for collecting may be designed differently, for example, comprising fixed support surfaces or support surfaces with rolling elements.

With reference to Figures 6 to 11, a possible embodiment of a skin movement device 410 according to the present invention is shown.

The skin movement device 410 according to this embodiment implements a solution of the type shown in Figure 4, i.e., with a movable bulkhead, and in which the device 410 is also equipped with means for feeding 512 and collecting 620 the skin P. For simplicity of presentation, the skin is not shown in the figures, but its movement is implemented as described in Figures 4.1 to 4.6.

Elements corresponding or equivalent to the previously described embodiments are identified by the same reference numbers.

Device 410 includes means for gripping and displacing 220 the skin P and first means for detecting 60 the surface characteristics of the skin P.

The first means for detecting 60 are configured to inspect an area on a first side P1 of the skin P, for example, the premium outer portion (grain) of the skin P.

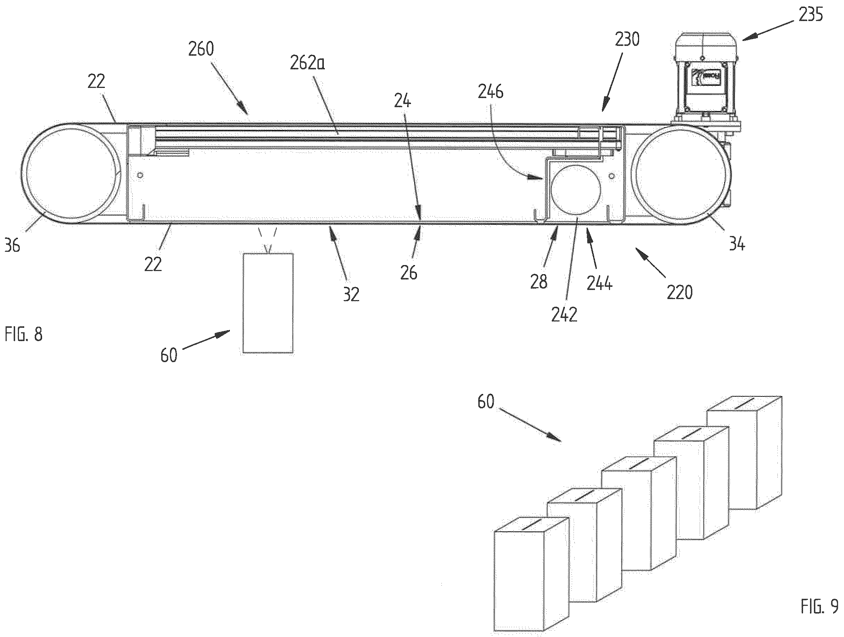

The first means for detecting 60 preferably comprise a plurality of aligned cameras, as shown in Figure 9, which ensure scanning of the skin P along its entire length.

The gripping and displacing means 220 comprise a movable belt 22 that defines an inner side 24 and an outer side 26, wherein the outer side 26 defines a gripping surface 28 on which the skin P is made to adhere and kept suspended, in particular by adhesion of the second side P2 of the skin P.

The adhesion and suspension of the skin P to the gripping surface 28 of the belt 22 is preferably achieved by air suction means 230. The gripping surface 28 comprises a flat portion 32, and the means for detecting 60 are positioned such that the inspection area A affects the first side P1 of the skin P when said skin is located in the flat portion 32 of the gripping surface 28.

The movable belt 22 comprises a conveyor belt that winds around two rotation rollers 34, 36. Preferably, the first roller 34 is motorized. For this purpose, an electric motor 35 is preferably used to rotate the first roller 34, which, in turn, drives the conveyor belt 22.

The flat portion 32 is defined in the outer side 26 of the conveyor belt 22, which extends between the two rotation rollers 34 and 36.

The conveyor belt 22 preferably comprises a plurality of through openings, not visible in the figures, and the air suction means 230 act from the inner side 24 of the conveyor belt 22 and, through the plurality of openings, define the gripping surface 28 for the skin P.

The suction means 230 comprise a variable-width suction cavity 242.

The suction cavity 242 identifies a corresponding suction side 244 facing the inner side 24 of the conveyor belt 22.

The suction cavity 242 is connected to a suction unit 450, such as a suction pump 450, shown in Figure 6 in the disassembled position.

The suction cavity 242 comprises a movable bulkhead 246, whose movement determines the variation of the gripping surface 28 of the conveyor belt 22 to which the skin P is made to adhere.

Preferably, the movement of the bulkhead 246 is carried out by suitable displacement means 260, shown in detail in Figure 6A. The displacement means 260 preferably comprise a pair of electric axles 262a, 262b, each equipped with a respective carriage 264a, 264b on which the bulkhead 246 is mounted.

In variant embodiments, the movement means could be pneumatic.

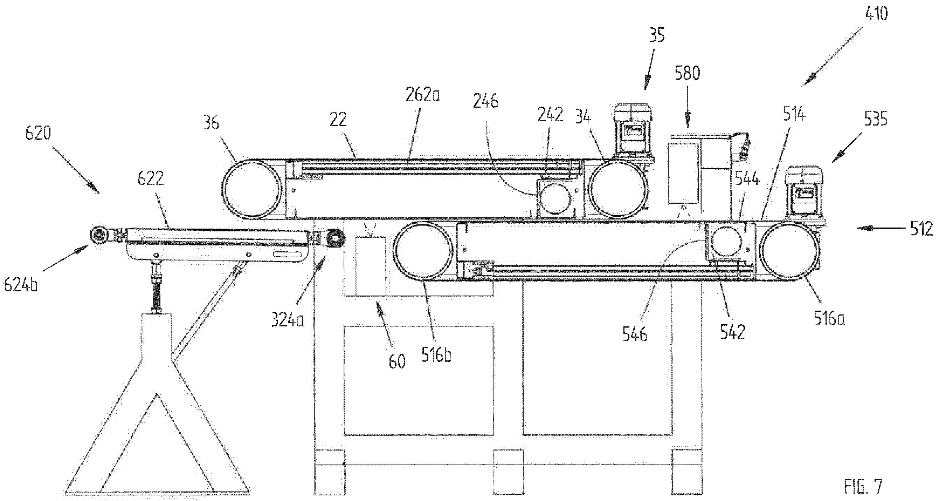

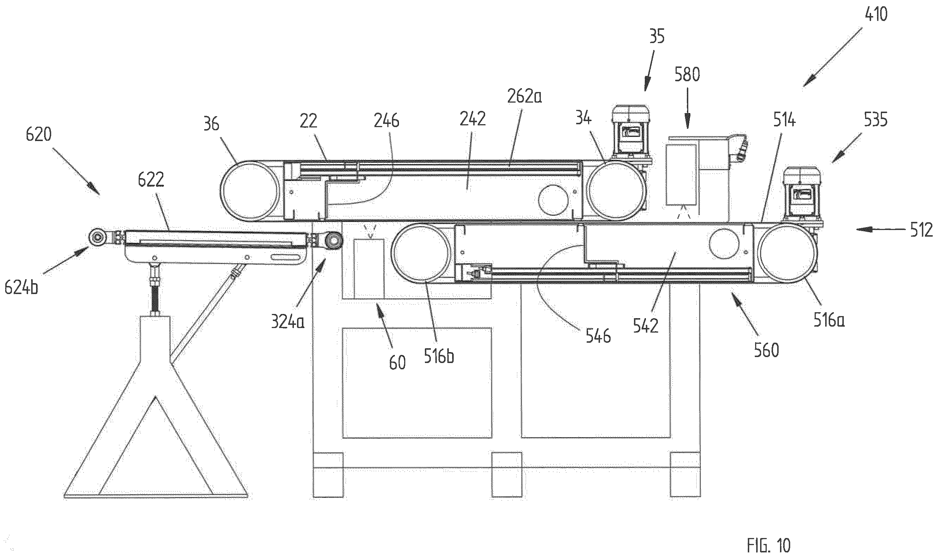

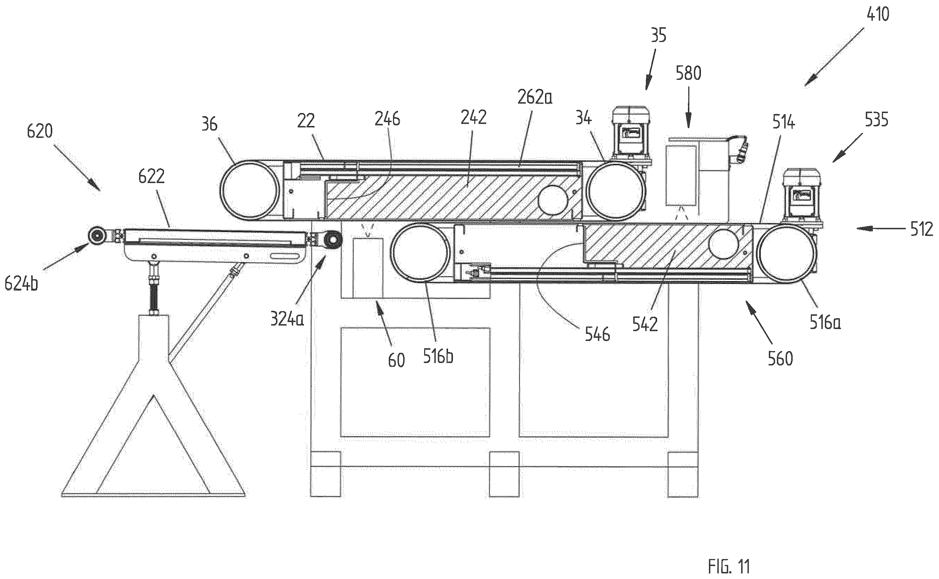

In figures 7 and 8, the movable bulkhead 246 is shown in a first position, corresponding to the position illustrated in figure 4.1, while in figures 10 and 11 the movable bulkhead 246 is shown in a position of maximum extension, corresponding to the position illustrated in figure 4.5. The means for feeding 512 preferably comprise a feeding conveyor belt 514 rotating around two respective rotation rollers 516a, 516b.

Preferably, the first roller 516a is motorized. For this purpose, an electric motor 535 is preferably used to rotate the first roller 516a, which, in turn, drives the feeding conveyor belt 514.

The feeding conveyor belt 514 preferably comprises a plurality of through openings, not visible in the figures, and air suction means 530 operate from the inner side of the feeding conveyor belt 514 and, through the plurality of openings, define the gripping surface for the skin P that must reach the conveyor belt 22.

The suction means 530 comprise a variable-width suction cavity 542. The suction cavity 542 identifies a corresponding suction side 544 facing the inner side of the feeding conveyor belt 514.

The suction cavity 542 is connected to a suction unit 550, such as a suction pump 550, shown in Figure 6 in the disassembled position.

According to this embodiment, the suction means 530 preferably comprise a movable bulkhead 546, the movement of which determines the variation of the gripping surface of the feeding conveyor belt 514 on which the skin P is made to adhere.

The movable bulkhead 546 is preferably moved similarly to that described with reference to the movable bulkhead 246 associated with the conveyor belt 22.

Preferably, the movement of the bulkhead 546 is carried out by means of suitable movement means 560, for example, by means of a pair of electric axles, each equipped with a respective carriage on which the bulkhead 546 is mounted.

In variant embodiments, the movement means could be pneumatic.

In Figures 7 and 8, the movable bulkhead 546 is shown in a first position of minimum extension, while in Figures 10 and 11 the movable bulkhead 546 is shown in a position of maximum extension.

In operation, air suction means 530 ensure the skin P is held on the feeding conveyor belt 514, while the rotation of the feeding conveyor belt 514 allows the skin P to be moved up to the conveyor belt 22. The skin P is then subjected to the inspection operation via the first means for detecting 60, using the methods described previously.

The means for collecting 620 preferably comprise a rest plane 622 designed to receive the skin P released from the conveyor belt 22.

Preferably, rolling means 624a, 624b are provided on the sides of the rest plane 622 to facilitate the sliding of the skin P.

Finally, the device 410 also comprises second means for detecting 580 configured to inspect an area of the second side of the skin P opposite to the side of the skin inspected by the first means for detecting 60, for example, the less valuable portion (split) of the skin P.

The second means for detecting 580 are preferably positioned in correspondence with the means for feeding 512.

In a preferred embodiment, the second means for detecting 580 are preferably of the same type as the first means for detecting 60.

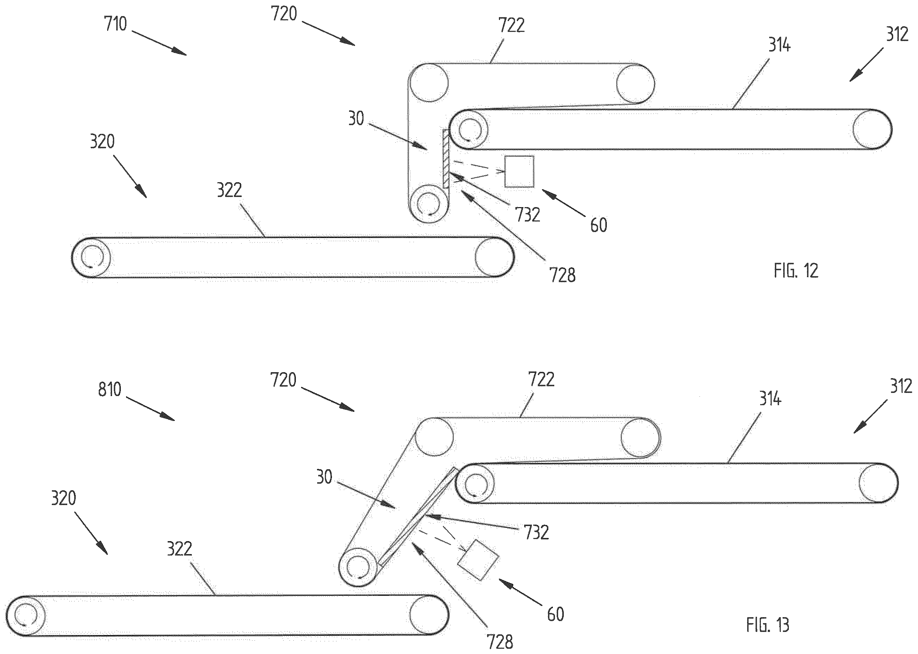

With reference to Figure 12, a schematic embodiment of the movement device 710 of the invention is shown.

Elements corresponding or equivalent to the previously described embodiments are identified by the same reference numerals.

The device 710 includes means for gripping and displacing 720 the skin (not shown) and first means for detecting 60 the skin's surface characteristics configured to inspect an area on a first side of the skin.

The means for gripping and displacing 720 include a movable belt 722 that defines a gripping surface 728 on which the skin is made to adhere and kept suspended.

The adhesion of the skin to the gripping surface 728 of the belt 722 is preferably achieved by air suction means 30, similarly to what was previously described.

According to this embodiment, the gripping surface 728 comprises at least one substantially vertical flat portion 732, and the means for detecting 60 are positioned such that the inspection area, identified by said means for detecting60, affects the first side of the skin when the skin is located in the vertical flat portion 732 of the gripping surface 728. The aforementioned advantages described above are therefore achieved.

The device 710 then preferably comprises means for feeding 312 the skin to the conveyor belt 722 and means for collecting 320 the skin from the conveyor belt 722.

The means for feeding 312 preferably comprise a feeding conveyor belt 314, and the means for collecting 320 preferably comprise a collecting conveyor belt 322.

With reference to Figure 13, a schematic embodiment of the movement device 810 of the invention is shown.

Elements corresponding or equivalent to the embodiment previously described with reference to Figure 12 are identified by the same reference numbers.

This embodiment differs from the previous embodiment in that the flat portion 732 of the gripping surface 728 of the means for gripping and displacing 720 is oblique, and the means for detecting 60 are appropriately positioned such that the inspection area covers the first side of the skin when the skin is located in the oblique flat portion 732 of the gripping surface 728. It has therefore been demonstrated, through the previous detailed description of the embodiments of the skin movement device represented in the drawings, that the device according to the present invention allows the intended purposes to be achieved. In particular, the device according to the present invention allows the creation of an alternative solution for the movement of skins and the detection of their surface characteristics compared to known plants.

## Claims

1. Movement device (10; 110; 210; 310; 410; 710; 810) for lifting a skin (P) comprising means for gripping and displacing (20; 120; 220; 720) said skin (P) and first means for detecting (60) the surface characteristics of said skin (P) which are configured to inspect an area on a first side (P1) of said skin (P);
**characterized in that** said gripping and displacement means (20; 120; 220; 720) comprise a movable belt (22; 722) that identifies an inner side (24) and an outer side (26), said outer side (26) being adapted to define a gripping surface (28; 728) on which said skin (P) is made to adhere and held in suspension by effect of air suction means (30; 130; 230) acting on said outer side (26), said gripping surface (28; 728) comprising a flat portion (32; 732) and said first means for detecting (60) being positioned in such a way that said inspection area affects said first side (P1) of said skin (P) when said skin (P) is in said flat portion (32; 732).

2. Device (10; 110; 210; 310; 410; 710; 810) according to claim 1, **characterized in that** said movable belt (22; 722) comprises a conveyor belt (22; 722) winding around at least two rotation rollers (34, 36).

3. Device (10; 110; 210; 310; 410; 710; 810) according to claim 2, **characterized in that** said flat portion (32; 732) is defined in said outer side (26) of said conveyor belt (22; 722) extending between said two rotation rollers (34, 36).

4. Device (10; 110; 210; 310; 410; 710; 810) according to any one of the preceding claims, **characterized in that** said movable belt (22; 722) comprises a plurality of through openings (27) and said air suction means (30; 130; 230) act from said inner side (24) of said movable belt (22;722) and through said plurality of openings (27) they define said gripping surface (28; 728) in said outer side (26) of said movable belt (22; 722).

5. Device (10; 110; 210; 310; 410; 710; 810) according to any one of the preceding claims, **characterized in that** said air suction means (30; 130; 230) comprise a suction cavity (42; 142a-142h, 242) that identifies a suction side (44; 144a-144h, 244) facing said inner side (24) of said movable belt (22; 722).

6. Device (10; 110; 210; 310; 410; 710; 810) according to any one of the preceding claims, **characterized in that** said air suction means (30; 130; 230) are configured to modify the suction area and the corresponding area of said gripping surface (28; 728) on which said skin (P) is made to adhere.

7. Device (110) according to any one of the preceding claims, **characterized in that** said air suction means (130) comprise a plurality of suction cavities (142a-142h) side by side, each cavity of said plurality of cavities (142a-142h) identifying a suction side (144a-144h) facing said inner side (24) of said movable belt (22; 722).

8. Device (110) according to claim 7, **characterized in that** said suction cavities (142a-142h) are activatable independently of each other.

9. Device (210) according to any one of claims 1 to 6, **characterized in that** said air suction means (230) comprise a suction cavity (242) that identifies a suction side (244) facing said inner side (24) of said movable belt (22; 722) and comprise a movable bulkhead (246) adapted to modify the extension of the suction area of said suction side (244).

10. Device (10; 110; 210; 310; 410; 710; 810) according to any one of the preceding claims, **characterized in that** said air suction means (30; 130; 230) comprise a suction unit (450), preferably a suction pump (450).

11. Device (310; 410; 710; 810) according to any one of the preceding claims, **characterized in that** it further comprises means for feeding (312; 512) said skin (P) for said movable belt (22; 722) and/or means for collecting (320; 620) said skin (P) from said movable belt (22; 722).

12. Device (310; 410; 710; 810) according to claim 11, **characterized in that** said means for feeding (312; 512) and/or said collection means (320; 620) comprise a conveyor belt (314; 514; 322) for said skin (P) or a rest plane (622) for said skin (P).

13. Device (10; 110; 210; 310; 410; 710; 810) according to any one of the preceding claims, **characterized in that** it comprises second means for detecting (580) for detecting the surface characteristics of said skin (P) and configured to inspect an area on a second side (P2) of said skin (P) opposite said first side (P1).

14. Device (10; 110; 210; 310; 410; 710; 810) according to any one of the preceding claims, **characterized in that** said first means for detecting (60) and/or said second means for detecting (580) comprise a linear scan camera.

15. Plant for the treatment of a skin (P) comprising a device for moving (10; 110; 210; 310; 410; 710; 810) a skin (P), **characterized in that** said movement device (10; 110; 210; 310; 410; 710; 810) is made according to any one of the preceding claims.
